Europäisches Patentamt

European Patent Office

Office européen des brevets

(19)

(11) Publication number: **0 231 403 B1**

## EUROPEAN PATENT SPECIFICATION

(12)

(45) Date of publication of patent specification: **19.02.92**

(51) Int. Cl.⁵: **H04N 7/14**

(21) Application number: **85830210.2**

(22) Date of filing: **01.08.85**

(54) **Two-way audiovisual telecommunications system.**

(43) Date of publication of application:
**12.08.87 Bulletin 87/33**

(45) Publication of the grant of the patent:
**19.02.92 Bulletin 92/08**

(84) Designated Contracting States:
**AT BE CH DE FR GB IT LI LU NL SE**

(56) References cited:
**DE-C- 3 329 493**
**US-A- 4 005 265**

**PHILIPS TECHNISCHE RUNDSCHAU, vol. 36, no. 4, 1976/77, pages 89-97; E.A. AAGAARD et al.: "Ein Bildtelefonnetz zu Versuchszwecken"**

**WORLD RADIO TV HANDBOOK, vol. 35, 1981, pages 384-385, Billboard Ltd., London, GB; "Characteristics of television systems"**

(73) Proprietor: **Biselli, Antonio**
**Viale Michelangelo, 19**
**I-06080 Palazzo d'Assisi (Perugia)(IT)**

(72) Inventor: **Biselli, Antonio**
**Viale Michelangelo, 19**
**I-06080 Palazzo d'Assisi (Perugia)(IT)**

(74) Representative: **Zanotti, Nemo**
**c/o Modiano & Associati S.r.l. Via Irnerio 12/2**
**I-40126 Bologna(IT)**

## Description

This invention deals with two-way audio visual telecommunications system using electron optics and comprises the filming, the electrical transmission and simultaneous reproduction of still or moving images over distances, capable of the transmission and integral reception of video and sound.

In order to transmit images over a certain distance, on the basis of modern technological knowledge, it is necessary to transform luminous and/or chromatic information into electrical impulses; these can be transferred over distances by Hertz'waves (radio) or by a materiale line (coaxial cable) and therefore transformed into the original optical information by the user's television.

Present technology allows only a limited flow of information. It is necessary: to consider the image composed of a limited number of points, called picture elements; to send, via the transmission channel, the information contained in each picture element, not simultaneously but one after another, in sequence, according to the same transmission sequence, relying on, for the construction of the image, the persistance capacity of the retina of the eye (as in the cinema) and the phosphorus present on the screen. During the respective phases of analysis and synthesis with widely modulated video signals, only the luminance gives the television information in black and white while the luminance and chromaticity of the fundamental colours - red, yellow, blue - characterize the wave-length of the coloured picture elements.

It is well known that in television transmission the TV camera is the site of numerous electrical modulations, since the photo-sensitive plate, on which the optical image is formed, is scanned by the cathode-rays of the same TV camera many times/second with the result that the formation of the corresponding electronic image will be millions of electric modulations/second which can be sent over distances only by appropriate means of transmission.

This invention aims to use all the means of transmission relative to telecommunication channels and it is characterized by the claim described below. It resolves the problem of creating a two-way audio visual telecommunications (video telephone and teleradiovision)system by using electron optics which satisfy the requirements of simultaneous transmission and reception of video and sound, making the telephone and radio indispensable means of communication for teleradiovision.

The technological application of electron optics obtains the following results: a system of electrical and magnetic fields form an image from a source of electrons, above the appropriate fluorescent cathode-ray screens. These electron optics act by focusing on an electronic beam in an elevated vacuum, that, because of a prelevant effect of the magnetic field, is always convergent; they are activated by rotating them on their axes and the image is rotated around the axis of symmetry of the revolution of the magnetic field. The rays of the wave associated with the same electrons coincide formally with the fundamental relation of the geometric optics so that the optical image that is formed in the camera, appropriately guided by the electronic beam,forms an electronic image on the screen of the cathode-ray tube, that after continual scanning creates a video modulated electronic current that can be transmitted over a distance and reproduce the same effects on the receiver's screen.

The advantages obtained with this invention essentially lie in the fact that still or moving images can be transmitted over a distance using all the channels of telecommunications.
On the whole the system distinguishes itself from those already in use because it is an extremely simple means of transmission and reception over distances of the image points through the analog-electronic video-modulation signals, which result from the fundamental relationship that units geometric and electron optics.

The invention is described in more detail in the drawings in which:

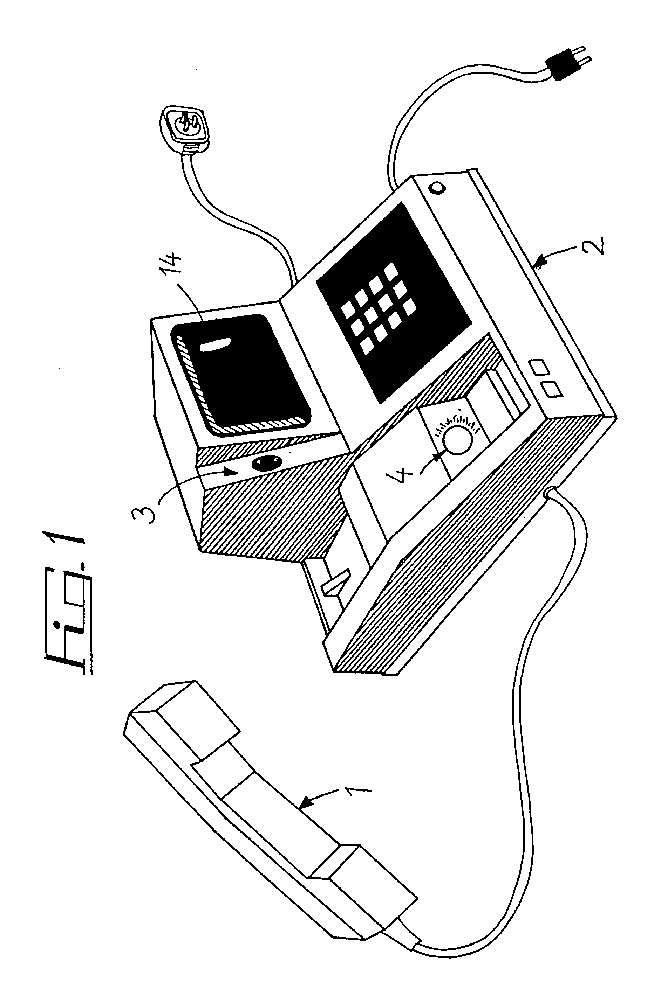

Fig. 1 is a perspective representation of the practical application of a video telephone system.

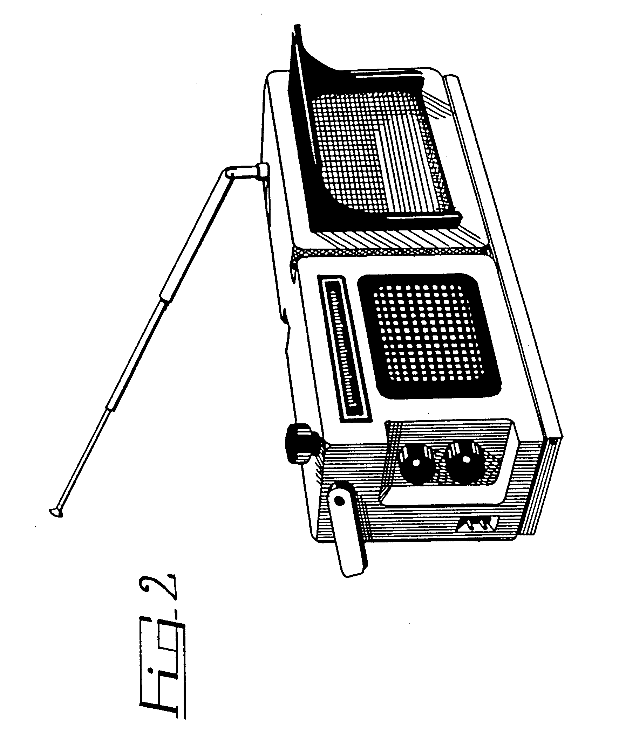

Fig. 2 shows an audio-radio receiver with a screen in conformity with this invention in order to apply it to teleradiovision.

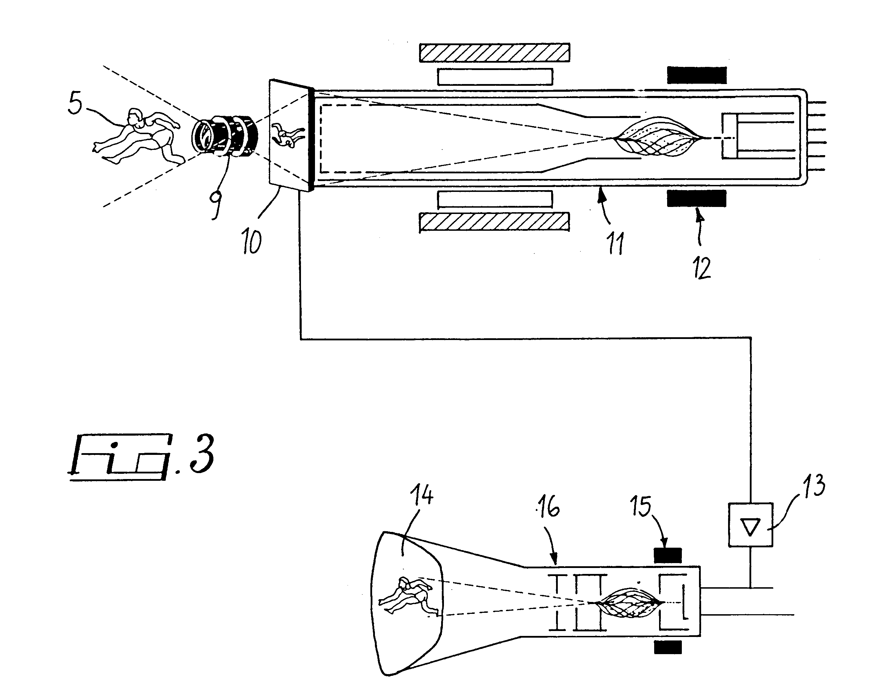

Fig. 3 represents a schematical view of the system with the video-transmitter section and the video-receiver section.

The system comprises a switchboard device 2 with telephone 1 and a video transmitter 3 with a source of lights 4 for a proper illumination of the object 5. The transmitter comprises the lens 9, the screen 10 where the optical image is formed, the cathode-ray tube 11, the magnetic lens 12. The lens 9, cathode-ray tuve 11, and magnetic lens 12 are aligned on the same level in order to function and are housed on the inside of a TV-camera.

The video receiver comprises the cathode-ray tube (TV) 16, the magnetic lens 15 appropriately placed, and the monitor 14 with appropriate modulation 13.

In a preferential application of the invention, the receiver may be an usual television to which the analog video signals are supplied through a synchro modulator-generator.

During operation the magnetic lens 12 generate a plurality of small beams from the cathode-ray of the TV-camera 11 which scan the optical image on the screen 10, whereby each small beam generates an analogical signal.

These analogical signals are transformed in the video modulator 13 into video signals for the TV-receiver 16 so that the small beams generated by the magnetic lens 15 reconstruct the image on the monitor 14 of the TV-receiver.

The practical application of the inventive concepts consists in the transmission and reception over distances of integral information including the parameters of the phonic channel and a visualization of a still or moving image in the form of analogic electrical signals by way of normal telecommunication means, to allow a new system of video telephonics and teleradiovision, not included in the actual state of technology. Therefore, the system is novel and it constitutes an inventive activity likely for immediate industrial application.

## Claims

1. Two-way audiovisual telecommunication system characterized in that, for each way, it comprises a transmitter including a TV-camera with a cathode-ray tube (11) having an anode defined by a screen (10) adapted to fix an optical image thereon, a magnetic lens (12) operatively associated to said cathode-ray tube and adapted to generate a plurality of small beams from said cathode-ray, said beams scanning the optical image on the screen and each beam generating an analogic signal, a TV-receiver being further provided including a cathode-ray tube (16) with which a magnetic lens (15) is operatively associated to generate a plurality of small beams reconstructing the image on the monitor (14) of said TV-receiver, said receiver being connected to a video modulator (13) which transforms the analogic signals of said transmitter into video signals for said TV-receiver.

## Revendications

1. Système de télécommunications audiovisuelles à deux voies, caractérisé en ce que, pour chaque voie, il comporte un émetteur comprenant une caméra TV équipée d'un tube cathodique (11) possédant une anode définie par un écran (10) apte à fixer une image optique sur celui-ci, une lentille magnétique (12) associée fonctionnellement audit tube cathodique et apte à générer une pluralité de petits faisceaux à partir dudit tube cathodique, lesdits faisceaux balayant l'image optique sur l'écran et chaque faisceau générant un signal analogique, un récepteur TV étant en outre prévu, comprenant un tube cathodique (16) auquel est associée fonctionnellement une lentille magnétique (15) pour générer une pluralité de petits faisceaux reconstituant l'image sur le moniteur (14) dudit récepteur TV, ledit récepteur étant connecté à un modulateur vidéo (13) qui transforme les signaux analogiques dudit émetteur en signaux vidéo pour ledit récepteur TV.

## Patentansprüche

1. Audiovisuelles Zweirichtungsfernmeldesystem, dadurch **gekennzeichnet,** daß es für jede Richtung einen Sender umfaßt, der eine Fernsehkamera mit einer Katodenstrahlröhre (11) enthält, die eine von einem Schirm (10) gebildete Anode zum Festhalten eines optischen Bildes auf diesem hat, wobei eine magnetische Linse (12) mit der Katodenstrahlröhre betriebsmäßig verbunden und geeignet ist, aus dem Katodenstrahl eine Vielzahl dünner Strahlen zu erzeugen, die das optische Bild auf dem Schirm abtasten und jeweils ein Analogsignal erzeugen, und daß ferner ein Fernsehempfänger vorgesehen ist, umfassend eine Katodenstrahlröhre (16), mit der eine magnetische Linse (15) betriebsmäßig verbunden ist, um eine Vielzahl dünner Strahlen zu erzeugen, welche das Bild auf dem Monitor (14) des Fernsehempfängers rekonstruieren, wobei der Empfänger mit einem Videomodulator (13) verbunden ist, der die Analogsignale des Senders in Videosignale für den Fernsehempfänger umformt.

Fig. 1

Fig. 2

Fig.3